Europäisches Patentamt

European Patent Office

Office européen des brevets

(19)

(11) Veröffentlichungsnummer : **0 100 863**
**B1**

(12)                         EUROPÄISCHE PATENTSCHRIFT

(45) Veröffentlichungstag der Patentschrift :
30.10.85

(21) Anmeldenummer : 83106540.4

(22) Anmeldetag : 05.07.83

(51) Int. Cl.⁴ : **F 01 P   3/08, F 16 B   2/24**

(54) Ölspritzvorrichtung zur Kolbenkühlung von Brennkraftmaschinen.

(30) Priorität : 22.07.82 DE 3227409

(43) Veröffentlichungstag der Anmeldung :
22.02.84 Patentblatt 84/08

(45) Bekanntmachung des Hinweises auf die Patenterteilung : 30.10.85 Patentblatt 85/44

(84) Benannte Vertragsstaaten :
AT DE FR GB IT SE

(56) Entgegenhaltungen :
DE-A- 1 957 499
DE-A- 2 938 431
DE-C-   968 013
US-A- 3 910 550
US-A- 4 188 854

(73) Patentinhaber : BAYERISCHE MOTOREN WERKE
Aktiengesellschaft
Postfach 40 02 40 Petuelring 130
D-8000 München 40 (DE)

(72) Erfinder : Wimmer, Helmut, Dipl.-Ing.
Stockäckerring 13
D-8011 Kirchheim (DE)

(74) Vertreter : Schweiger, Erwin
c/o Bayerische Motoren Werke AG - AJ-35 Postfach
40 02 40 Petuelring 130
D-8000 München 40 (DE)

**Beschreibung**

Die Erfindung geht gemäß dem Oberbegriff des unabhängigen Patentanspruches von der DE-A 29 38 431 aus.

Bei der bekannten Bauart sind das Steuerventil und die Druckfeder in einem Sackloch des Flansches angeordnet. Das Steuerventil ist ein Kolben mit einer Ringnut, in die ein quer zur Hubrichtung des Kolbens angeordneter Stift eingreift. Mit dem Stift ist der Steuerventil-Kolben gegen Herausfallen vor der Montage des Flansches am Maschinengehäuse gesichert.

Bei der bekannten Bauart verteuern Sackloch und Querbohrung für den Sicherungsstift die Herstellung. Schließlich ist die Montage der Absperreinrichtung für den Zulaufkanal im Flansch zur Spritzdüse umständlich.

Der Erfindung liegt die Aufgabe zugrunde, eine Ölspritzvorrichtung der bekannten Bauart so zu gestalten, daß Herstellung und Montage vereinfacht und somit kostengünstiger sind.

Diese Aufgabe wird durch die im Kennzeichen des unabhängigen Patentanspruches angegebenen Merkmale gelöst. Eine Durchgangsbohrung, wie im ersten Teilmerkmal angegeben, ist gegenüber einem Sackloch in der Herstellung wesentlich einfacher. Die Durchgangsbohrung bietet weiter den Vorteil, den die Spritzdüse tragenden Flansch als ein Bauteil mit planparallelen Flächen auszubilden. Diese Flächen, von denen eine zur Anlage am Maschinengehäuse und die andere zur Auflage für die Verschraubung dient, sind in einfacher Weise herzustellen. Weiter kann das im zweiten Merkmal beschriebene Steuerventil über seinen am federseitigen Ende angeordneten Hubanschlag mit der Auflagefläche für die Verschraubung zusammenwirken. Damit ist für das Steuerventil eine in einer Bewegungsrichtung wirkende Sicherung mit einfachen Mitteln erreicht. Gleichachsig mit dem Steuerventil wird die Druckfeder montiert, die gemäß dem dritten Teilmerkmal mit dem ventilfernen Ende an einer gesonderten Abstützeinrichtung anliegt. Die Abstützeinrichtung ist aus einer im wesentlichen U-förmigen Klammer gebildet. Diese Klammer, deren Steg sowohl zur Abstützung der Druckfeder als auch als Anschlag für das durch Öldruck verlagerte Steuerventil dient, wird mittels der elastischen Haltezungen durch Klipsen am Flansch vormontiert. Die damit erreichte selbsttätige Festlegung bzw. Befestigung der Abstützeinrichtung am Flansch unterstützt deren Montage durch einfache Handhabung besonders vorteilhaft. Nach einem weiteren Teilmerkmal des Hauptanspruches ist am Steg der Klammer zumindest ein Fortsatz mit einer Ausnehmung angeordnet, der als Unterlage für eine Verschraubung des Flansches dient. Zum einen entfallen damit gesonderte Beilagscheiben für die Verschraubung und zum anderen ist für die Klammer bzw. die Abstützeinrichtung nach der Endmontage des Flansches eine betriebssichere Halterung erreicht.

Mit der Erfindung ist eine für die Herstellung der Ölspritzvorrichtung günstige Gestaltung erzielt. Weiter ist mit der Anordnung von Steuerventil, Druckfeder und Abstützeinrichtung in einer gemeinsamen Montagerichtung in Verbindung mit der selbsttätigen Befestigung der Abstützeinrichtung am Flansch eine vereinfachte und somit kostengünstige Montage erreicht.

Bei einer Klammer aus relativ dünnem Federblech zum erleichterten Aufklipsen kann der Steg der Klammer durch zur Durchgangsbohrung konzentrische Ein-/Ausdrückungen versteift sein. Dabei kann eine erste Ein-/Ausdrückung als Anschlag für das vom Öldruck verlagerte Steuerventil dienen und in der zweiten Ein-/Ausdrückung die Druckfeder mit ihrem ventilfernen Ende zentriert werden. Weiter sind vorzugsweise die Haltezungen der Klammern durchbrochen zum formschlüssigen Eingriff von am Flansch ausgebildeten Nasen. Mit dieser formschlüssigen Schnappbefestigung ist in vorteilhafter Weise zugleich eine Lagesicherung der Klammer am Flansch erreicht.

In der Zeichnung ist ein Ausführungsbeispiel der Erfindung dargestellt.

Die Zeichnung zeigt in

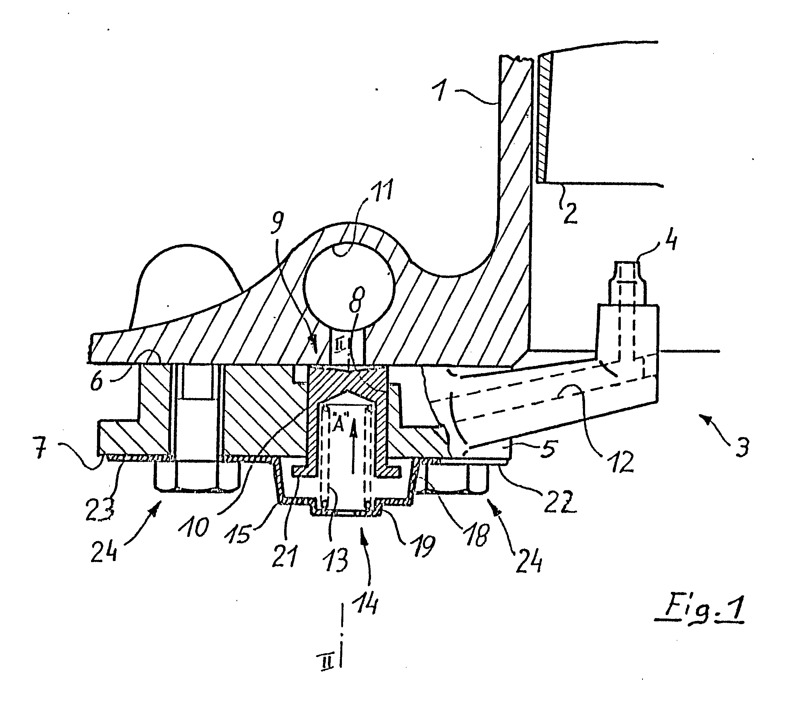

Figur 1 eine Ölspritzvorrichtung mit an einem Maschinengehäuse befestigten Flansch der Spritzdüse,

Figur 2 den Flansch im Querschnitt gemäß der Linie II-II in Fig. 1 mit vormontiertem, durch eine Klammer gesichertem Steuerventil,

Figur 3 die Klammer in perspektivischer Darstellung.

Am Maschinengehäuse 1 einer nicht näher dargestellten Brennkraftmaschine ist zur Kühlung eines Kolbens 2 eine Ölspritzvorrichtung 3 angeordnet. Die Ölspritzvorrichtung 3 umfaßt eine Spritzdüse 4 an einem Flansch 5. Der Flansch 5 liegt über eine Anschlußfläche 6 am Maschinengehäuse 1 an. Weiter weist der Flansch 5 eine zur Anschlußfläche 6 planparallele Auflagefläche 7 auf. Eine zu den Flächen 6 und 7 quergerichtete Durchgangsbohrung 8 im Flansch 5 nimmt einen als Steuerventil 9 dienenden Kolben 10 auf. Der Kolben 10 steuert den Zulauf des Kühlöles vom Verteilerkanal 11 im Maschinengehäuse 1 zum Spritzdüsenkanal 12. Eine vorgespannte Druckfeder 13 wirkt auf den Kolben 10 in Schließrichtung gemäß Pfeil A ein.

Die Druckfeder 13 liegt mit ihrem ventilfernen Ende an einer gesonderten Abstützeinrichtung 14 an. Die Abstützeinrichtung 14 ist eine im wesentlichen U-förmige Klammer 15 aus relativ dünnen Federblech mit Haltezungen 16 und einem Steg 17. Um Verformungen des Steges 17 aus Belastungen der Druckfeder 13 zu vermeiden, ist der Steg 17 durch konzentrisch zur Durchgangsbohrung 8 angeordnete Ein-/Ausdrückungen 18 und 19 versteift. Die Ein-/Ausdrückung 18 dient als Anschlag für den ab einem vorbestimmten Öldruck die Verbindung zwischen dem Verteilerkanal 11 und dem Spritzdüsenkanal 12 freigebenden Kolben 10. Über die Ein-/Ausdrückung 19 ist die Druckfeder 13 am Steg 17 zentriert.

Die Klammer 15 ist über ihre Haltezungen 16 durch eine Schnappbefestigung am Flansch 5 gehalten. Die Haltezungen 16 sind fensterartig durchbrochen zum formschlüssigen Eingriff von Nasen 20 am Flansch 5. Mit dem formschlüssigen Eingriff ist zugleich eine Lagesicherung der Klammer 15 am Flansch 5 erreicht.

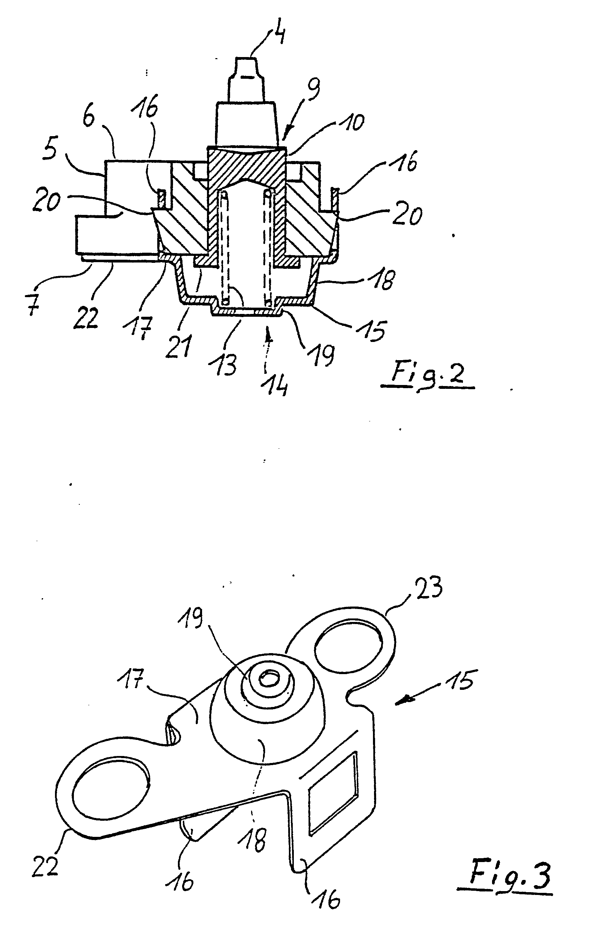

Zur Vormontage der Ölspritzvorrichtung 3 wird der Kolben 10 in die Durchgangsbohrung 8 eingeführt. Ein Anschlagbund 21 am federseitigen Ende des Kolbens 10 schlägt gegen die Auflagefläche 7 des Flansches 5, wodurch die Verlagerung des Kolbens 10 gemäß Pfeil A begrenzt ist, Fig. 2. Die Druckfeder 13 zwischen dem Kolben 10 und dem Steg 17 der Klammer 15 wird mit dem Aufschieben der Klammer 15 auf den Flansch 5 vorgespannt, wobei mit dem Einschnappen der Nasen 20 in die durchbrochenen Haltezungen 16 das Vorspannmaß für die Druckfeder 13 erreicht ist.

Am Steg 17 der Klammer 15 sind Fortsätze 22 und 23 mit je einer Durchbrechung angeordnet. Die Fortsätze 22 und 23 dienen als Unterlagen für die Verschraubung 24 des Flansches 5 mit dem Maschinengehäuse 1.

Um niedrig bauende Ein-/Ausdrückungen 18, 19 zu erreichen, kann der Flansch 5 eine in der Auflagefläche 7 zur Durchgangsbohrung 8 konzentrische Senkbohrung (nicht gezeigt) für den Anschlagbund 21 des Kolbens 10 aufweisen. Die am Flansch 5 durch Klipsen vormontierte Klammer 15 ist über ihre als Unterlagen für die Verschraubung 24 dienenden Fortsätze 22 und 23 betriebssicher gehalten, wobei die Schnappbefestigung von den im Betrieb auftretenden Öldruckkräften entlastet ist.

## Patentansprüche

1. Ölspritzvorrichtung (3) zur Kolbenkühlung von Brennkraftmaschinen,
— bei der eine Spritzdüse (4),
— an einem mit dem Maschinengehäuse verschraubten Flansch (5) angeordnet ist,
— der eine Ausnehmung aufweist,
— in der ein Steuerventil (9) mit einer Druckfeder (13) angeordnet ist,
— wobei das Steuerventil (9) über einen Hubanschlag (21) in der Ausnehmung gesichert ist, dadurch gekennzeichnet,
— daß die Ausnehmung eine Durchgangsbohrung (8) ist,
— daß das Steuerventil (9) am federseitigen Ende den Hubanschlag (Anschlagbund 21) aufweist, und
— daß die Druckfeder (13) mit dem ventilfernen Ende an einer gesonderten Abstützeinrichtung (14) anliegt,
— die im wesentlichen aus einer U-förmigen Klammer (15) gebildet ist mit einem Steg (17),
— der in Raststellen am Flansch (5) einschnappende elastische Haltezungen (16) und
— einen als Unterlage für die Flansch-Verschraubung (24) dienenden Fortsatz (22 bzw. 23) mit einer Ausnehmung aufweist.

2. Ölspritzvorrichtung nach Anspruch 1, dadurch gekennzeichnet,
— daß der Flansch (5) eine zu einer Anschlußfläche (6) für das Maschinengehäuse (1) planparallel Auflagefläche (7) für die Verschraubung (24) aufweist, und
— daß das Steuerventil (9) ein Kolben (10) mit einem Anschlagbund (21) ist,
— der gegen die Auflagefläche anschlägt.

3. Ölspritzvorrichtung nach Anspruch 1, dadurch gekennzeichnet,
— daß die Klammer (15) aus relativ dünnem Federblech ist,
— daß der Steg (17) der Klammer durch konzentrisch zur Durchgangsbohrung (8) angeordnete Ein-/Ausdrückungen (18, 19) versteift ist und
— daß die Haltezungen (16) durchbrochen sind zur formschlüssigen Verrastung mit Vorsprüngen (Nasen 20) am Flansch (5).

## Claims

1. An oil-spray device (3) for cooling pistons in internal combustion engines,
— in which a spray nozzle (4),
— is arranged on a flange (5) bolted onto or connected by screws to the engine housing (1),
— which flange has an aperture,
— in which there is arranged a control valve (9) provided with a compression spring (13),
— the control valve (9) being secured by means of a stroke stop (21) in the aperture, characterised in that
— the aperture is a through-bore (8),
— that the control valve (9) is provided with the stroke stop (stop collar 21) at the spring end, and
— that the compression spring (13) rests at its end remote from the valve on a separate support device (14),
— which is formed essentially from a U-shaped clip (15) with a transverse part (17),
— which comprises elastic retaining tongues (16) snapping into detents on the flange (5) and
— an extension (22, 23) with an aperture, serving as a base for the flange screws or bolts (24).

2. An oil-spray device according to claim 1, characterised in that
— the flange (5) comprises a support face (7), the plane of which is parallel to an attachment face (6) for the engine housing (1), for the screws or bolts (24), and
— that the control valve (9) is a piston (10) with a stop collar (21),
— which abuts against the support face.

3. An oil-spray device according to claim 1, characterised in that
— the clip (15) is of relatively thin spring sheet metal,
— that the transverse part (17) of the clip is stiffened by pressed-in/pressed-out portions (18, 19) arranged concentrically with respect to the through-bore (8), and

— that the retaining tongues (16) are pierced through for shape-engaging detention with protuberances (noses 20) on the flange (5).

**Revendications**

1. Dispositif de vaporisation d'huile (3) pour le refroidissement des pistons de moteurs à combustion interne,
— avec une buse de projection (4),
— prévue sur une bride (5) vissée sur le carter (1) du moteur,
— qui comporte une cavité,
— dans laquelle est logée une soupape de commande (9) avec un ressort de compression (13),
— la soupape de commande (9) étant fixée dans la cavité par une butée de course (21), caractérisé en ce que :
— la cavité est un perçage traversant (8),
— la soupape de commande (9) comporte la butée de déplacement (collet de butée 21) du côté du ressort et,
— le ressort de compression (13) s'appuie par son extrémité située du côté de la soupape contre un dispositif d'appui particulier (14),

— qui est constitué par une pince (15) ayant essentiellement une forme de U avec une âme (17),
— qui comporte des languettes de fixation (16), s'encliquetant élastiquement sur la bride (5) pour des positions de repos, et
— un prolongement (22 ou 23), servant de rondelle pour le vissage de la bride (24) avec une cavité.

2. Dispositif de vaporisation d'huile selon la revendication 1, caractérisé en ce que :
— la bride (5) comporte une surface d'appui (7) parallèle plane à une surface de raccordement (6) pour le carter (1) du moteur, pour le vissage (24), et
— la soupape de commande (9) est un piston (10) avec un collet de butée (21),
— qui vient buter contre la surface d'appui.

3. Dispositif de vaporisation d'huile selon la revendication 1, caractérisé en ce que :
— la pince (15) est en une tôle élastique relativement mince,
— l'âme (17) de la pince est renforcée par des bossages concave et/ convexe (18, 19), concentriques au perçage traversant (8), et
— les languettes de fixation (16) sont interrompues pour l'encliquetage par la forme avec des saillies (becs 20) sur la bride (5).

*Fig.1*

0 100 863

Fig.2

Fig.3